(19) **Europäisches Patentamt / European Patent Office / Office européen des brevets**

(11) **EP 2 660 723 A1**

(12) **EUROPEAN PATENT APPLICATION**

(43) Date of publication:
06.11.2013 Bulletin 2013/45

(51) Int Cl.:
*G06F 11/10* (2006.01)   *G06F 17/30* (2006.01)
*G06F 3/06* (2006.01)

(21) Application number: 12166706.7

(22) Date of filing: 03.05.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicants:
• **Thomson Licensing**
  **92130 Issy-les-Moulineaux (FR)**
• **Inria Institut National de Recherche en Informatique et en Automatique**
  **78150 Le Chesnay (FR)**

(72) Inventors:
• **Kermarrec, Anne-Marie**
  **35042 Rennes Cedex (FR)**
• **Le Merrer, Erwan**
  **35576 Cesson Sevigne (FR)**
• **Straub, Gilles**
  **35576 Cesson Sevigne (FR)**
• **Van Kempen, Alexandre**
  **35576 Cesson Sevigne (FR)**

(74) Representative: **Perrot, Sébastien**
  **Technicolor**
  **1-5 rue Jeanne d'Arc**
  **92130 Issy Les Moulineaux (FR)**

(54) **Method of data storing and maintenance in a distributed data storage system and corresponding device**

(57)   The present invention generally relates to distributed data storage systems. In particular, the present invention is related to a method of data storing in a distributed data storage system that comprises a clustering of data blocks and the use of random linear combinations of data blocks that makes the distributed data storage system efficient in terms of storage space needed and inter-device communication costs, both for the storage method, as for the associated repair method.

**Fig. 5a**

EP 2 660 723 A1

600 — Initialization

Add replacement data storage device to cluster of failed one — 601

Receive from remaining storage devices in cluster new random linear combinations — 602

Combine new random linear combinations and reduce to X and Y — 603

Store the result in replacement storage device — 604

Done — 605

**Fig. 5b**

**Description**

**1. Field of invention.**

The present invention generally relates to distributed data storage systems. In particular, the present invention relates to a method of data storing in a distributed data storage system that combines high data availability with a low impact on network and data storage resources, in terms of bandwidth needed for exchange of data between network storage devices and in terms of number of network storage devices needed to store an item of data. The invention also relates to a method of repair of a failed storage device in such a distributed data storage system, and devices implementing the invention.

**2. Technical background.**

With the rapidly spreading deployment of mass data handling devices, such as video and image handling devices, reliable storage of huge amounts of data is required, for direct storage or as part of backup storage. As more and more devices are provided with network connectivity, distributed storage of data in network connected devices ('storage devices') is considered as a cost effective solution. In such distributed data storage systems that can be deployed over non-managed networks such as on the Internet, methods have been developed that copy a same item of data to multiple network connected devices to ensure data availability and resilience to data loss. This is called data replication or adding redundancy. Redundancy has to be taken in a broad sense, and covers mere data duplication as well as usage of coding techniques such as erasure or regenerating codes (where encoded data is placed on storage devices for resilience). To cope with a risk of permanent data loss due to device failure or temporary data loss due to temporary device unavailability, a high redundancy is wished. However, to reduce costs in terms of communication and storage size needed (so-called replication costs) it is rather wished to have a low redundancy.
Redundancy is thus a key aspect of any practical system which must provide a reliable service based on unreliable components. Storage systems are a typical example of services which make use of redundancy to mask ineluctable disk unavailability and failure. As discussed above, this redundancy can be provided using basic replication or coding techniques. Erasure codes can provide much better efficiency than basic replication but they are not fully deployed in current systems. The major concern when using erasure codes, except the increasing complexity due to coding-decoding operations, comes from the maintenance of failed storage devices . In fact when a storage device fails, all the blocks of the different files it stored must be replaced to ensure data durability. This means that for each lost block, the entire file from which this block originates must be downloaded and decoded to recreate only one new block. This overhead in terms of bandwidth and decoding operations compared to basic data replication considerably limits the use of erasure codes in systems where failures and thus repairs are the norm rather than the exception. Nevertheless, network coding can be used to greatly reduce the necessary bandwidth during the maintenance process. This sets the scene for novel distributed storage systems especially designed to deal with maintenance of files which have been encoded, thus leveraging the efficiency of erasure codes while mitigating its known drawbacks.
What is needed is a distributed data storage solution that achieves high level of data availability and that jointly considers availability requirements and replication costs.

**3. Summary of the invention.**

The present invention aims at alleviating some of the inconveniences of prior art.
In order to optimize data storing in a distributed data storage system, the invention proposes a method of data storing in a distributed data storage system comprising storage devices interconnected in a network, the method comprising the steps, executed for each of the data files to store in the distributed data storage system, of:

- splitting the data file in k data blocks, and creation of at least n encoded data blocks from these *k* data blocks through random linear combination of the *k* data blocks;
- spreading the at least n encoded data blocks of the file over the at least n storage devices that are part of a same storage device cluster, each cluster comprising a distinct set of storage devices, the at least n encoded data blocks of the file being distributed over the at least n storage devices of a storage device cluster so that each storage device cluster stores encoded data blocks from at least two different files, and that each of the storage devices of a storage device cluster stores encoded data blocks from at least two different files.

The invention also comprises a method of repairing a failed storage device in a distributed data system where data is stored according to the storage method of the invention and a file stored is split in *k* data blocks, the method comprising the steps of:

- adding a replacement storage device to a storage device cluster to which the failed storage device belongs;
- the replacement storage device receives, from any of *k*+1 remaining storage devices in the storage device cluster, k+1 new random linear combinations, generated from two encoded data blocks from two different files X and Y stored by each of the *k*+1 storage devices;
- the new random linear combinations received are combined between them to obtain two linear combinations, in which two blocks are obtained, one only related to X and another only related to Y, using an algebraic operation;
- the two linear combinations are stored in the replacement storage device.

According to a variant embodiment of the method of repairing, the method of repairing comprises reintegration into the storage device cluster of a failed storage device that that returns to the distributed data system.

## 4. List of figures.

More advantages of the invention will appear through the description of particular, non-restricting embodiments of the invention.

The embodiments will be described with reference to the following figures:

Figure 1 shows a particular detail of the storage method of the invention.
Figure 2 shows an example of data clustering according to the storage method of the invention.
Figure 3 shows the repair process of a storage device failure.
Figure 4 illustrates a device capable of implementing the invention.
Figure 5 shows an algorithm implementing a particular embodiment of the method of the invention.

## 5. Detailed description of the invention.

As mentioned previously, it is now understood that erasure codes can provide much better efficiency than basic replication in data storage systems. Yet in practice, their application in such storage systems is not wide-spread in spite of the clear advantages. One of the reasons of their relative lack of application is that the state of the art coding methods consider that a new storage device can be found each time that a block needs to be inserted or repaired; i.e. it is assumed that there exists an unlimited resource of storage devices. Furthermore, the availability of storage devices is not taken into account. Those two prerequisites constitute a practical barrier for a simple application of erasure codes in current distributed data storage systems, and are confusing when design choices must be made that answer those key issues. To take away these drawbacks, this invention proposes the clustering of storage devices in charge of hosting blocks of data that constitute the redundancy in the distributed data storage system and further proposes practical means of using and deploying erasure codes. Then, the invention permits significant performance gains when compared to both simple replication and coding schemes. The clustering according to the invention allows maintenance to occur at a storage device level (i.e. the storage device comprising many blocks of many files) instead of at a single file level, and the application of erasure codes allows efficient data replication, thus leveraging multiple repairs and improving performance gain of the distributed data storage system.

The efficiency of erasure codes is maximal when Maximum Distance Separable (MDS) codes are used, as they are so-called 'optimal'. This means that, for a given storage overhead, MDS codes provide the best possible efficiency in term of data availability. An MDS code is a code such that any subset of k out of n redundancy blocks (= encoded data blocks) are sufficient for reconstruction of lost data. This means that to reconstruct a file of M bytes one needs to download exactly M bytes. Reed Solomon (RS) is a classical example of an MDS code. Randomness provides a flexible way to construct MDS codes.

The invention proposes a particular method of storing data files in a distributed data storage system comprising storage devices interconnected in a network. The method comprises the following steps, executed for each of the data files to store in the distributed data storage system:

- splitting the data file in *k* data blocks, and creation of n encoded data blocks from these *k* blocks through random linear combination of the k data blocks;
- spreading the n encoded data blocks of the file over the n storage devices that are part of a same storage device cluster, each cluster comprising a distinct set of storage devices, the n encoded data blocks of the file being distributed over the n storage devices of a storage device cluster so that each storage device cluster stores encoded data blocks from at least two different files, and that each of the storage devices of a storage device cluster stores encoded data blocks from at least two different files.

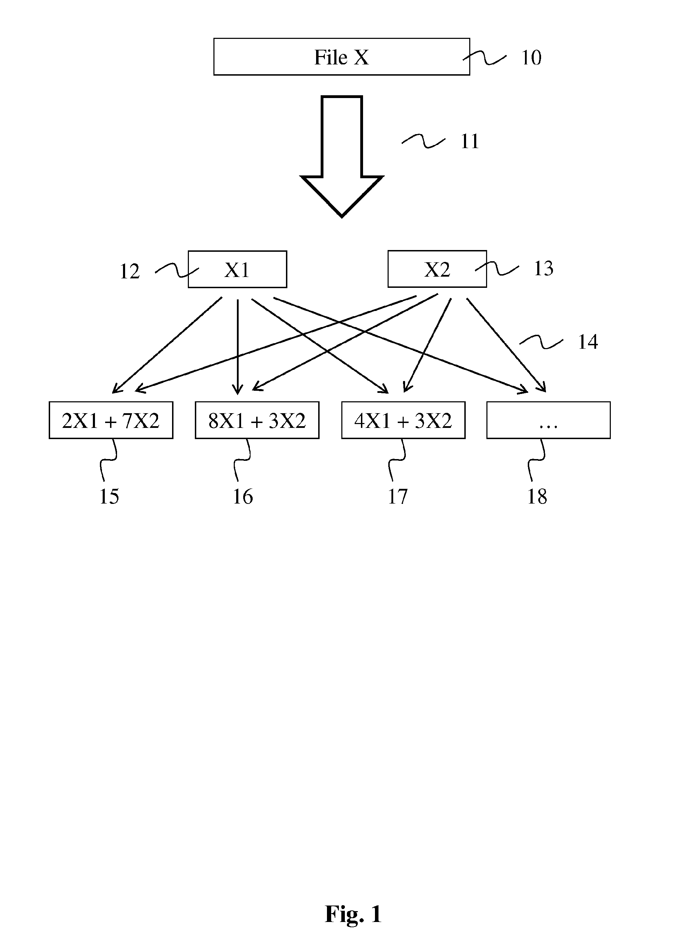

**Figure 1** shows a particular example of the storage method of the invention, where a file is split into k=2 data blocks and the associated linear combination method that generates n=4 encoded data blocks. It is proceeded as follows: each file X (10) is chunked into *k* data blocks of equal size (12, 13) and then n encoded data blocks *Xj* (15, 16, 17, 18) are created as random linear combinations of these k blocks. Each storage device j of the distributed storage system then stores an encoded data block *Xj* which is a random linear combination of these k data blocks. The associated random coefficients $\alpha$ (e.g.: 2 and 7 for block 15) are chosen uniformly at random in a field Fq, i.e. Fq means "finite field" with q elements. The utilization of finite fields is necessary for implementation of error correction codes, and is known by the person skilled in the art. Shortly, a finite field is a set of numbers, such as a set of discrete numbers, but with rules for addition and multiplication that are different as commonly known for discrete numbers.

In addition to the storing of the n encoded data blocks *Xj* (15-18), the associated random coefficients $\alpha$ need to be stored. As their size is negligible compared to the size of the blocks *Xj,* the storage space needed for storing these coefficients is also negligible. In general, when the wording (random) linear combinations is used here, this comprises the associated coefficients.

As a practical example, let us consider that file X (10) has a size of *M*=1 Gbyte. Parameters *k* (number of file chunks) and n (number of random linear combinations of the k file chunks) are chosen such that there exists a code implementation, for example *k*=2 and n=4. The associated random coefficients $\alpha$ can be generated with a prior art random number generator that is parameterized to generate discrete numbers in the range of 1 to q.

n/k are chosen according to the redundancy level that is wished by the designer of the distributed storage system. For example for a code k=2, n = 4 we have n/k =2 and thus to store a file of 1Gb, the system needs 2Gb of storage space. In addition, n/k represents the number of failures (number of failed storage devices) the system can tolerate. For the example given of k=2, n=4 the original file can be recovered as long as there remain k=2 encoded data blocks. There exists thus a compromise between the quantity of redundancy that is introduced and the fault tolerance of the distributed storage system.

Reconstruction of a file thus stored in the distributed storage system is done as follows. In mathematical terms, each of the n encoded data blocks *Xj* which has thus been created from a random linear combination from the k data blocks can be represented as a random vector of the subspace spanned by the k data blocks. For the reconstruction of file X, it is thus sufficient to obtain *k* <u>independent</u> vectors in this subspace. The independency requirement is fulfilled because the associated random coefficients $\alpha$ were previously, during the storage of file X, generated by the above mentioned random number generator. In fact, every family of k vectors which is linearly independent forms a non-singular matrix which can be inverted, and thus the file X can be reconstructed with a very high probability (i.e. close to 1), or, in more formal terms: let D be the random variable denoting the dimension of the subspace spanned by n redundant blocks *Xj* or otherwise said n random vectors, which belong to $F_q^n$. It can then be shown that:

$$\Pr(D = n) = \frac{(q^n - 1)\prod_{i=1}^{n-1}(q^n - q^i - 1)}{q^{(n^2)}}$$

The equation gives the probability that the dimension of the subspace spanned by the m random vectors is exactly n, and so that the family of these n vectors is linearly independent. This probability is shown to be very close to 1 for every n when using practical field sizes, typically $2^8$ or $2^{16}$. As mentioned, the field size is the number of elements in the finite field Fq. The values $2^8$ or $2^{16}$ are practical values because one element of the finite field corresponds to respectively one or two bytes (8 bits or 16bits) . For example for a field size of $2^{16}$ and for n = 16, which are classical and practical values, when contacting exactly n = 16 storage devices the probability to be able to reconstruct the file X is 0.999985. The random (MDS) codes provide thus a flexible way to encode data optimally. They are different compared to classical erasure codes, which use a fixed encoding matrix and thus have a fixed rate k/n, i.e. a redundancy system then cannot create more than a fixed number of redundant and independent blocks. In fact when using random codes as proposed in this invention, the notion of rate disappears, because one can generate as many redundant blocks *Xj* as necessary, just by making new random combinations of the k blocks *Xj* of file X. This property makes the random codes a rate less code, also called a fountain code. This rate less property makes these codes very suitable in the context of distributed storage systems, as it makes reintegration of erroneously 'lost' storage devices possible, as will be discussed further on.

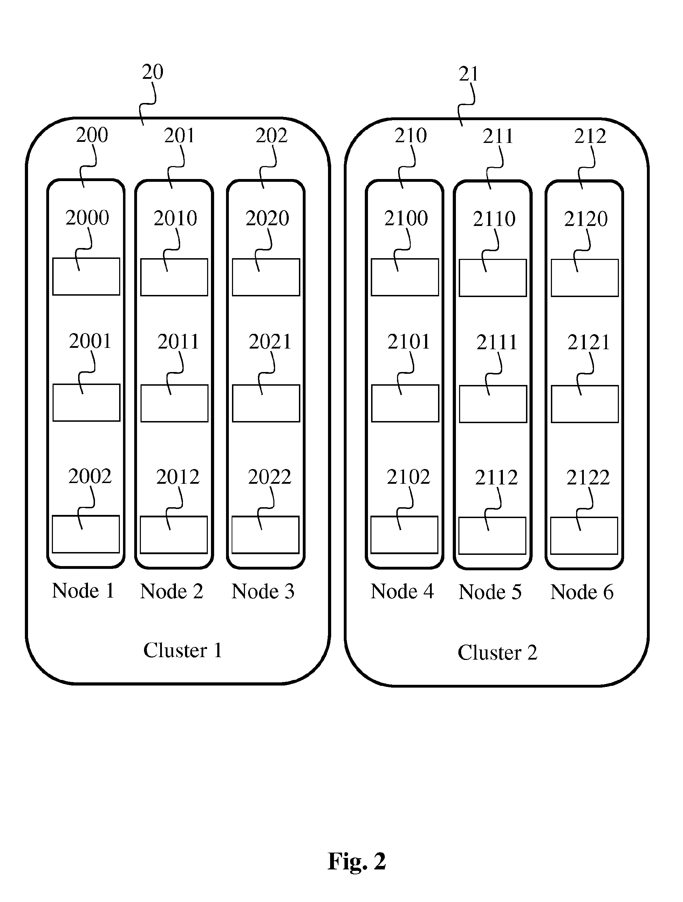

In conjunction to the discussed use of MDS erasure codes (of parameter k,n as described above)that make repair of lost data easy and efficient, the invention proposes employing of a particular data clustering method that leverages simultaneous repair of lost data belonging to multiple files. The size of the cluster depends on the type of code. More precisely if the MDS code is generating n encoded data blocs out of k blocs, the size of the cluster shall be exactly n. An example of such clustering according to the storage method of the invention is illustrated in **Figure 2.**

The set of all storage devices is partitioned into disjoint clusters. Each storage device thus belongs only to one cluster. Each file to store in the distributed storage system thus organized is then stored into a particular cluster. A cluster comprises data from different files. A storage device comprises data from different files. Moreover a storage device comprises one data block from every file stored on that cluster. Fig. 2 gives an example for six files, X1 to X6, each file comprising n=3 encoded data blocks Xj that are random linear combinations of k blocks of these files. The two storage clusters each comprise a set of three storage devices: a first cluster 1 (20) comprises storage devices 1, 2 and 3 (200, 201, and 202) and a second cluster 2 (21) comprises three storage s 4, 5 and 6 (210, 211 and 212). Three (n=3) encoded data blocks Xj of file X1 are stored in cluster 1 (20): a first block (2000) on storage device 1 (200), a second block (2010) on storage device 2 (201) and a third block (2020) on storage device 3 (202). Three encoded data blocks Xj of file X2 are stored in cluster 2 (21): a first block 2100 on storage device 4 (210), a second block 2110 on storage device 5 (211), and a third block 2120 on storage device 6 (212). Likewise, cluster 1 also stores encoded data blocks Xj of a file X3 (2001, 2011, 2021), and encoded data blocks Xj of a file X5 (2002, 2012, 2022) on storage devices 1, 2 and 3 (respectively 200, 201, 202). Likewise, cluster 2 also stores encoded data blocks Xj of a file X4 (2101, 2111, and 2121) and of a file X6 (2102, 2112, and 2122) on storage devices 4, 5 and 6 (respectively 210, 211 and 212). The files are stored in order of arrival (e.g. file X1 on cluster 1, file X2 on cluster 2, file X3 on cluster 1, etc, according to a chosen load balancing policy.

To manage the files, it is sufficient to maintain two indexes: one that maps each file to a cluster, and one that maps each storage device to a cluster. According to a particular embodiment of the invention, storage devices can be identified by their IP (Internet Protocol) address.

The data block placement strategy of the invention implies simple file management which scales well with the number of files stored in the distributed storage system, while directly serving the maintenance process of such a system as will be explained further on. Note that the way on how clusters are constructed and how clusters are filled with different files can be done according to any policy, like a uniform sampling or using specific protocols. Indeed, various placement strategies exist in state of the art, some focused on load balancing and some others on availability for instance.

Placement strategy and maintenance (repair) processes are considered as two building blocks which are usually independently designed.

With the present invention, the placement strategy directly serves the maintenance process as will be explained further on. Distributed data storage systems are prone to failures due to the mere size of commercial implementations of such systems. Typically, a distributed data storage system that serves for storing data from Internet subscribers to this service, employs thousands of storage devices equipped with hard disc drives. A reliable maintenance mechanism is thus required in order to repair data loss caused by these failures. To do so, the system needs to monitor storage devices and traditionally uses a timeout-based triggering mechanism to decide if reparation must be performed. A first pragmatic point of the clustering method of the invention is that clusters of storage devices are easy to manage and monitoring can be implemented in a completely decentralized way, by creating autonomous clusters which monitor and regenerate themselves (i.e. repair data loss) when needed. This is in contrast with current storage systems, where to repair a failed storage device, a storage device which replaces a failed storage device needs to access all the files associated to each of the redundant blocks the failed storage device was storing; the storage devices to contact may then be located on arbitrary locations, requiring the replacement storage device to first query for their location, prior to repair. This does not occur in present invention as placement is structured, in a given cluster.

If according to this prior art the access to each stored file is considered an independent event, which is typically the case when using uniform random placement of data on a large enough set of storage devices, then the probability to succeed in contacting all these storage devices in the set decreases with the number of blocks if the redundant blocks of different files are not stored on the same set of storage devices. This comes from the fact that each host storage device is available in practice with a certain probability, and accessing an increasing number of such host storage devices then decreases the probability to be able to access all needed blocks at a given point in time. In contrast with the prior art solution described above, using the clustered placement method of the present invention, the probability for a repair to succeed no longer depends on the number of blocks stored by the failed storage devices, as storage devices are grouped in such a fashion that they host collaboratively the crucial blocks for a replacement storage device. In addition, the number of storage devices a replacement storage device needs to connect to does not depend on the number of blocks that were stored by the failed storage device. Instead, this number depends on the cluster size, which is fixed and predefined by the system operator, which thus reduces the number of connections the replacement storage device needs to maintain.

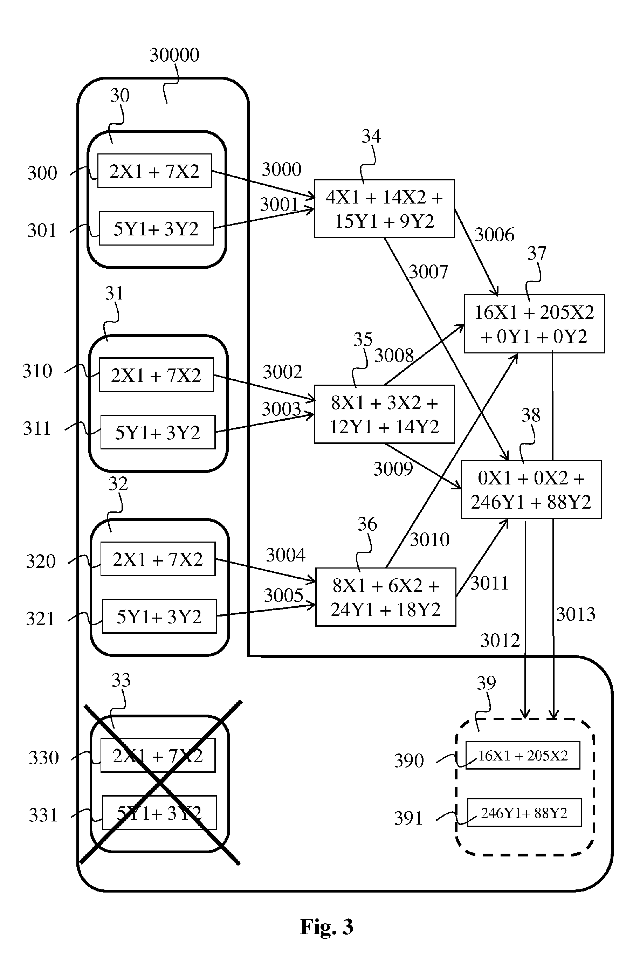

The particular efficiency of the storage method is best explained with the help of Fig. 3 that illustrates a repair of a failed storage device and that will be discussed further on.

In contrast with the method of the invention illustrated by means of figure 3, a prior-art repair process, when using classical erasure codes, is as follows: to repair one data block of a given file, the replacement storage device must download enough redundant, erasure code encoded blocks to be able to and decode them, in order to recreate the (un-encoded, plain data) file. Once this operation has been done, the replacement storage device can re-encode the file and regenerate the lost redundant data block, which re-encoding must be repeated for each lost block. This prior art method has the following drawbacks that are caused by the use of these types of codes:

1. To repair one block, i.e. a small part of a file, the replacement storage device must download all blocks stored by the other storage devices storing blocks of the file. This is costly in terms of communication, and time consuming, since the second step cannot be engaged when this first step is not completed;
2. Once the first step completed, the replacement storage device must make out the downloaded blocks to be able to regenerate the un-encoded, plain data file. This is a computing-intensive operation, even more so for large files;
3. Then, using the encoding algorithm, the lost block must be recreated by encoding it from the regenerated, plain data file.

By contrast with this prior art method, the clustered placement strategy of the storage method of the invention and the use of random codes, allows important benefits during the repair process. As has been shown, according to a prior art repair method, multiple blocks of a same file are combined between them. According to the method of the invention, network coding is used not at a file level but rather at a system level, i.e. the repair method of the invention comprises combining of data blocks of multiple files, which considerably reduces the number of messages exchanged between storage devices during a repair. The encoded data blocks Xj stored by the storage devices are mere algebraic elements, on which algebraic operations can be performed.

Let's first recall what must be obtained at the end of the repair process: in the context of the current invention, a repair of a failed storage device means a creation of a random vector for each file for which the failed storage device stored an encoded data block Xj. Any random vector is a redundant or encoded data block. The operation required for a repair process of a failed storage device is thus not to replace the exact data that was stored the failed storage device, but rather to regenerate the amount of data that was lost by the failed storage device. It will be discussed further on that this choice provides an additional benefit on what is called storage device reintegration.

In **Figure 3,** that illustrates a repair of a failed storage device according to the invention, based on a distributed data storage system that uses the method of storing data of the invention, a cluster (30000) initially comprises four storage devices (30, 31, 32, 33). Each storage device stores a random code block Xj of 2 files, file X and file Y. $k$=2 for both files X and Y (i.e. files X and Y are chunked into k=two blocks). A first storage device (30) stores random code blocks (= encoded data blocks) 300 and 301. A second storage device (31) stores random code blocks 310 and 311. A third storage device (32) stores random code blocks 320 and 321. A fourth storage device (33) stores random code blocks 330 and 331. It is assumed that the fourth storage device (33) fails and must be repaired. This is done as follows:

1. A fifth, replacement storage device (39) is added to the cluster (30000). The replacement storage device receives, from $k$+1 remaining storage devices in the cluster, new random linear combinations (with associated coefficients $\alpha$) of the random codes that are generated from these random codes stored by each storage device. This is illustrated by rectangles 34 - 36 and arrows 3000- 3005.
2. The resulting generated new random linear combinations are combined between them in such a manner that there remain two linear combinations which factors X, respectively Y are eliminated. I.e., one linear combination that is only related to X and another only related to Y. This elimination is done by carefully choosing the coefficients of these combinations, using for instance the classical "Gaussian elimination" algebraic operation.
3. The remaining two linear combinations are stored in the replacement storage device 39. This is illustrated by arrows 3012 and 3013.

Now, the repair operation is completed, and the system is considered in a stable and operating state again.

In most distributed storage systems, the decision to declare a storage device as a failed one, is performed using timeouts. The point is that this is a decision under uncertainty, which is prone to errors. In fact the storage device can be wrongfully timed-out and can unexpectedly reconnect after the reparation has been done. Of course the longer the timeouts are, the fewer errors are made. However using long timeouts is dangerous because the reactivity of the storage system is reduced, which possibly leads to irremediable data loss when failure bursts occur. The idea of reintegration is to reintegrate storage devices which have been wrongfully timed-out. Reintegration has not yet been addressed when using erasure codes. If reintegration is not implemented, reparation of a storage device that was wrongfully considered as being failed, was unnecessary, and is thus a waste of resources as it cannot contribute to tolerating additional failures. This comes from the fact that the repaired storage device is not containing independent redundancy from other storage devices, and thus it brings no additional redundancy benefits.

A particular advantageous embodiment of the invention comprises reintegration of a wrongfully failed storage device, i.e. of a device that was considered by the distributed data storage as failed, for example, upon a detected connection time-out, but that reconnects to the system. With the invention, such reintegration is possible, because it merely adds more redundant data to the cluster and a reparation of a wrongfully failed storage device, while at first sight unnecessary, adds to the redundancy of the cluster, and the next time any storage device of the same cluster fails, it is thus not necessary to execute a repair. This derives from the properties of random codes, along with the clustering scheme according to the invention. The reintegration thus adds to the efficiency with regard to resource use of the distributed data storage system.

Different variant embodiments of the invention are possible that exploit this notion of storage device reintegration.

According to a first variant embodiment, the size of the cluster is maintained at exactly n storage devices. If a storage device fails, it is replaced by a replacement storage device, that is provided with encoded data blocks according to the method of repairing a failed storage device of the invention. If the failed storage device returns (i.e., it was only temporarily unavailable), it is not reintegrated into the cluster as one of the storage devices of the cluster, but it is rather integrated as a free device in to a pool of storage devices that can be used, when needed, as replacement devices for this cluster, or according to a variant, for another.

According to a second variant embodiment, a failed device that was repaired, i.e. replaced by another, replacement storage device, and that returns to the cluster will be reintegrated into the cluster. This means, that the cluster now will be maintained at a level of n+1 storage devices for a certain period of time (i.e. up to the next failure), where it had previously n storage devices. Two cases apply: during the temporary absence of the failed device, no data was changed on the n nodes, the node can be simply added to the n storage nodes already part of the cluster. If, on the contrary, data was changed, the failed node needs to be synchronized with the rest of the n nodes of the cluster. This synchronization, rather than needing the operations that are required for a complete repair of a failed node, merely requires the generation of a new random linear combination of one block for each new file that was stored by the cluster during the absence of the device, as is described with the help of figure 1, and storage of the generated new random linear combinations by the failed storage device. Of course, if the cluster remains at a level of n+1 storage devices, any new file that is added to the cluster must be spread over the n+ 1 nodes of the cluster. This continues as long as there is no device failure. After the next device failure the size of the cluster will be reduced to n again.

As mentioned, according to a variant embodiment, in stead of comprising n storage devices, a cluster can comprise n+1 storage devices, or n+2 or n+10 or n+m, m being any integer number. This does not change the method of storing data of the invention, nor the method of repair, only it must be taking into account in the storage method, that from a file split in k data blocks, not n but n + m encoded data blocks are to be created, and are to be spread over the n + m storage devices part of the cluster. Having in a cluster more than n storage devices, has the advantage to have more redundancy in the cluster, but it creates more data storage overhead.

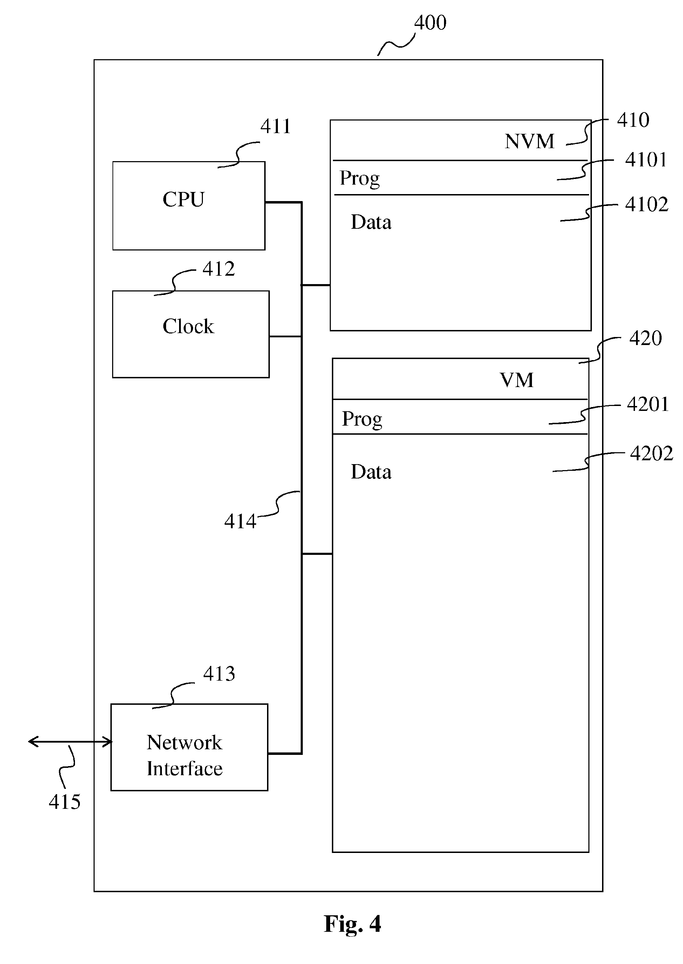

**Figure 4** shows a device that can be used as a storage device in a distributed storage system that implements the method of storing of a data item according to the invention. The device 400 can be a general purpose device that either plays the role of a management device of a storage device. The device comprises the following components, interconnected by a digital data- and address bus 414:

-   a processing unit 411 (or CPU for Central Processing Unit);
-   a non-volatile memory NVM 410 ;
-   a volatile memory VM 420 ;
-   a clock 412, providing a reference clock signal for synchronization of operations between the components of the device 400 and for timing purposes;
-   a network interface 413, for interconnection of device 400 to other devices connected in a network via connection 415.

It is noted that the word "register" used in the description of memories 410 and 420 designates in each of the mentioned memories, a low-capacity memory zone capable of storing some binary data, as well as a high-capacity memory zone, capable of storing an executable program, or a whole data set.

Processing unit 411 can be implemented as a microprocessor, a custom chip, a dedicated (micro-) controller, and so on. Non-volatile memory NVM 410 can be implemented in any form of non-volatile memory, such as a hard disk, non-volatile random-access memory, EPROM (Erasable Programmable ROM), and so on.

The non-volatile memory NVM 410 comprises notably a register 4201 that holds a program representing an executable program comprising the method of exact repair according to the invention, and a register 4202 comprising persistent parameters. When powered up, the processing unit 411 loads the instructions comprised in NVM register 4101, copies them to VM register 4201, and executes them.

The VM memory 420 comprises notably:

-   a register 4201 comprising a copy of the program 'prog' of NVM register 4101 ;
-   a data storage 4202.

A device such as device 400 is suited for implementing the method of the invention of storing of a data item, the device comprising

- means for splitting a data file in k data blocks (CPU 411, VM register 4202) and for creation of n encoded data blocks from these k blocks through random linear combination of the k data blocks;
- means (CPU 411, Network interface 413) for spreading the n encoded data blocks of the file over the n storage devices that are part of a same storage device cluster, each cluster comprising a distinct set of storage devices, the n encoded data blocks of the file being distributed over the n storage devices of a storage device cluster so that each storage device cluster stores encoded data blocks from at least two different files, and that each of the storage devices of a storage device cluster stores encoded data blocks from at least two different files

According to a variant embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

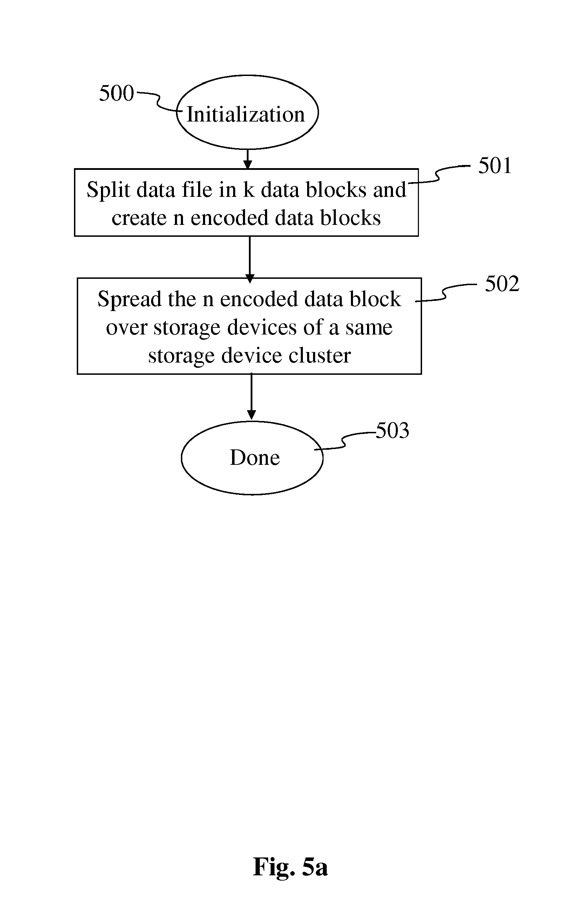

**Figure 5a** shows the method of storing data files in a distributed data storage system according to the invention in flow chart form.

In a first step 500, the method is initialized. This initialization comprises initialization of variables and memory space required for application of the method. In a step 501, a file to store is split in k data blocks, and n encoded data blocks are created from these k data blocks through a random linear combination of the k data blocks. In a step 502, the n data blocks of the file are spread over the storage devices in the distributed data storage system that are part of a same storage device cluster. Each cluster in the distributed data storage system comprises a distinct set of storage devices. The n encoded data blocks of the file are distributed (or spread to use the previously used wording) over a same storage device cluster, so that each storage device cluster stores encoded data blocks from two or more files, and each of the storage devices of a storage device cluster stores encoded data from at least two files, see also fig. 2 and its description. In step 503, the method is done.

Execution of these steps in a distributed data storage system according to the invention can be done by the devices in such a system in different ways.

For example, the steps 501 is executed by a management device, i.e. a management device that manages the distributed data storage system, or a management device that manages a particular cluster. In stead of being a particular device, such a management device can be any device, such as a storage device, that also plays the role of a management device.

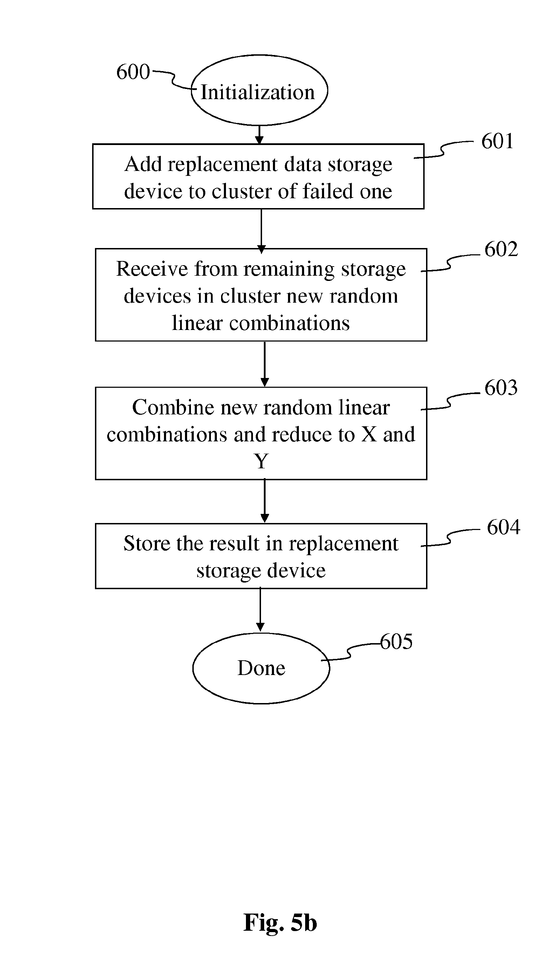

**Figure 5b** shows, in flow chart form, the method of repairing a failed storage device in a distributed data storage system where a file is split into k data blocks and data is stored according to the method of storing of the invention.

In a first step 600, the method is initialized. This initialization comprises initialization of variables and memory space required for application of the method. In a step 601, a replacement storage device is added to a storage device cluster to which a failed storage device belongs. Then in a step 602, the replacement storage device receives from all the k+1 remaining storage devices in the storage device cluster random linear combinations. These combinations are generated from two encoded data blocks from two different files X and Y (note: according to the method of storing data according to the invention, each storage device stores encoded data blocks from at least two different files). Then, in a step 603, these received new random linear combinations are combined between them so that two linear combinations are obtained, one only related to file X, and the other to file Y. In a forelast step 604, these two combinations are stored in the replacement device and the repair is done (step 605).

The repair method can be triggered by detection of a desired level of data redundancy dropping below a predetermined level.

**Claims**

1. Method of storing data files in a distributed data storage system comprising storage devices interconnected in a network, **characterized in that** the method comprises the following steps, executed for each of the data files to store in the distributed data storage system:

   - splitting the data file in k data blocks, and creation of at least n encoded data blocks from these $k$ data blocks through random linear combination of the $k$ data blocks;
   - spreading the at least n encoded data blocks of the file over the at least n storage devices that are part of a same storage device cluster, each cluster comprising a distinct set of storage devices, the at least n encoded data blocks of the file being distributed over the at least n storage devices of a storage device cluster so that each storage device cluster stores encoded data blocks from at least two different files, and that each of the storage devices of a storage device cluster stores encoded data blocks from at least two different files.

2. Method of repairing a failed storage device in a distributed data system where data is stored according to claim 1 and a file stored is split in k data blocks, **characterized in that** the method comprises the following steps:

- adding a replacement storage device to a storage device cluster to which the failed storage device belongs;
- the replacement storage device receives, from any of $k+1$ remaining storage devices in the storage device cluster, k+1 new random linear combinations, generated from two encoded data blocks from two different files X and Y stored by each of the $k+1$ storage devices;
- the new random linear combinations received are combined between them to obtain two linear combinations, in which two blocks are obtained, one only related to X and another only related to Y, using an algebraic operation;
- the two linear combinations are stored in the replacement storage device.

3. Method according to claim 2, wherein said method of repairing comprises reintegration into the storage device cluster of a failed storage device that that returns to the distributed data system.

**Fig. 1**

**Fig. 2**

**Fig. 3**

**Fig. 4**

**Fig. 5a**

**Fig. 5b**

Europäisches
Patentamt

European
Patent Office

Office européen
des brevets

**EUROPEAN SEARCH REPORT**

Application Number

EP 12 16 6706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/199123 A1 (COHEN BRAM [US]) 5 August 2010 (2010-08-05) * abstract; figures 1-5 * * paragraphs [0017], [0018], [0023], [0024], [0026], [0029], [0032] * ----- | 1-3 | INV. G06F11/10 G06F17/30 G06F3/06 |
| X | US 2008/313241 A1 (LI JIN [US] ET AL) 18 December 2008 (2008-12-18) * abstract; figures 1,3-6 * * paragraphs [0004], [0007], [0008], [0023], [0024], [0028], [0033] - [0035], [0038] * ----- | 1-3 | |
| A | WO 2009/135630 A2 (VIRTUAL NV B [BE]; DE SPIEGELEER KRISTOF [BE]; SLOOTMAEKERS ROMAIN RAY) 12 November 2009 (2009-11-12) * abstract * * page 2, lines 25-31 * * page 9, line 5 - page 11, line 32 * * claim 1 * ----- | 1-3 | |
| | | | TECHNICAL FIELDS SEARCHED (IPC) |
| | | | G06F |

The present search report has been drawn up for all claims

| Place of search | Date of completion of the search | Examiner |
|---|---|---|
| Munich | 12 October 2012 | Weber, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 16 6706

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2012

| Patent document cited in search report | Publication date | Patent family member(s) | | Publication date |
|---|---|---|---|---|
| US 2010199123 A1 | 05-08-2010 | CA | 2751358 A1 | 12-08-2010 |
| | | EP | 2394220 A1 | 14-12-2011 |
| | | KR | 20110122169 A | 09-11-2011 |
| | | US | 2010199123 A1 | 05-08-2010 |
| | | WO | 2010091101 A1 | 12-08-2010 |
| US 2008313241 A1 | 18-12-2008 | US | 2008313241 A1 | 18-12-2008 |
| | | WO | 2008157081 A2 | 24-12-2008 |
| WO 2009135630 A2 | 12-11-2009 | EP | 2288991 A2 | 02-03-2011 |
| | | US | 2011113282 A1 | 12-05-2011 |
| | | WO | 2009135630 A2 | 12-11-2009 |

EPO FORM P0459

For more details about this annex : see Official Journal of the European Patent Office, No. 12/82